Europäisches Patentamt

**European Patent Office**

**Office européen des brevets**

(19)

(11) Publication number: **0 040 456**

**A1**

# (12) EUROPEAN PATENT APPLICATION

(21) Application number: **81200548.6**

(22) Date of filing: **20.05.81**

(51) Int. Cl.³: **A 61 G 5/00**
**B 62 B 9/08**

(30) Priority: **20.05.80 NL 8002894**

(43) Date of publication of application:
**25.11.81 Bulletin 81/47**

(84) Designated Contracting States:
**AT BE CH DE FR GB IT LI LU NL SE**

(71) Applicant: **Lucas-Stichting voor Revalidatie**
**Postbus 88**
**NL-6430 AB Hoensbroek(NL)**

(72) Inventor: **Bougie, Theodoor Henricus Marie**
**Emmastraat 5**
**NL-6101 HD Echt(NL)**

(74) Representative: **Morel, Christiaan F., Dr.Ir.**
**MORELPATENT Laarstraat 3**
**NL-8166 GR Emst (Epe)(NL)**

(54) **Brake for a rolling chair.**

(57) Brake for means of conveyance such as a rolling chair, which brake comprises an axle (26), of which one end is connected to the frame of the rolling chair, a lever (25,27) of which one end is connected to the axle (26) such that it can revolve around the axle (26), a brake-block (31) connected to the lever (25,27) spring means (37,38) of which one end is fixed to the frame by means of a block (35) and an axle (33) and the other end of the spring means to the lever (25, 27) by means of a case 41 and bolts.

Fig:6

EP 0 040 456 A1

- 1 -

Brake for a rolling chair.

The invention relates to a brake, parking-brake or blocking-device for means of conveyance and more specifically for a rolling chair, which brake comprises an axle, of which one end is connected to the frame of the rolling chair, a lever of which one end is connected to the axle such that it can revolve around the axle, a brake-block connected to the lever, spring means of which one end is fixed to the frame and the other end to the lever.

Generally known are devices to reduce the speed of means of conveyance, which consists of a brake block, which can be pressed against the running surface of one of the tires by means of a lever. This kind of brake is by rolling chairs even the most commonly used one.

Most brakes used on rolling chairs consist of a lever with a handle with which a brake block can be pressed against the running surface of one of the tires by means of an eccentric disk or a four rods mechanism. Because the use of the brake needs a small vigour and because such kind of brake also can be used as parking brake, make that this kind of brakes are so generally used on rolling chairs. However if for example the pressure of the tire is less than normal. or when the rim of the wheel is twisted or slightly elliptic or when the tire the brake block or the mecanism get used up or are weared up this known brakes can not be trusted; the brake-force becomes smaller and such a brake is no longer reliable certainly not as parking-brake.

The aim of the invention is a brake and more specific-

- 2 -

ally a brake for use on a rolling chair, which brake acts on the running surface of one of the tires and which will have a brake force which is independent of the pressure of the tire.

The aim of the invention has been reached with a brake of which the spring means consist of a compression spring. This kind of brakes can be used on each conveyance means and more specifically on each rolling-chair, while the effect of the blocking device will be optimum at all times. Such brakes have a brake-fprce which will be independent of the pressure of the tire, the wear and tear of the tire or the brake-block or -shoe, while the wear of the mechanism nearly has no influence on the efficacy of the brake. The use of a compression spring has the great advantage that if such a spring breaks, still the brake will function partly.

In a prefered embodiment of the brake according to the invention the spring means comprises two springs mounted in serie and of which one spring has a spring constant of a low value and the other spring has a spring constant of a high value. It is possible to obtain a brake-force which stays constant what position the brake block has to take; it is possible to calculate the values of the two spring constants such that the brake acts with the same force, independent of the degree of impression of the brake block into the tire.

If the disered dimensions of the device are known it is possible by calculation to determine the length of the springs to be used and which spring constants the two springs need to have, if a certain brake-force is desired.

With reference to the accompanying drawings the invention will be explained more in detail and as an example, and in which:

Figure 1 is schematically a brake according to the invention, with a compression spring and in the non-working position.

Figure 2 is schematically the brake according to the invention as shown in Figure 1 and in the working position;

Figure 3 is schematically another possible embodiment of a brake with a draw-spring and in the non-working position;

Figure 4 is schematically another embodiment of a brake, with a draw-spring and in the working position;

Figure 5 is a fragmentary view of a rolling chair with a brake according to the invention;

Figure 6 is a sectional view of the brake of figure 5

Figure 7 is a sectional view of the brake of Figure 6 according to line VII-VII;

Figure 8 is a detail of another possible embodiment of a brake according to the invention.

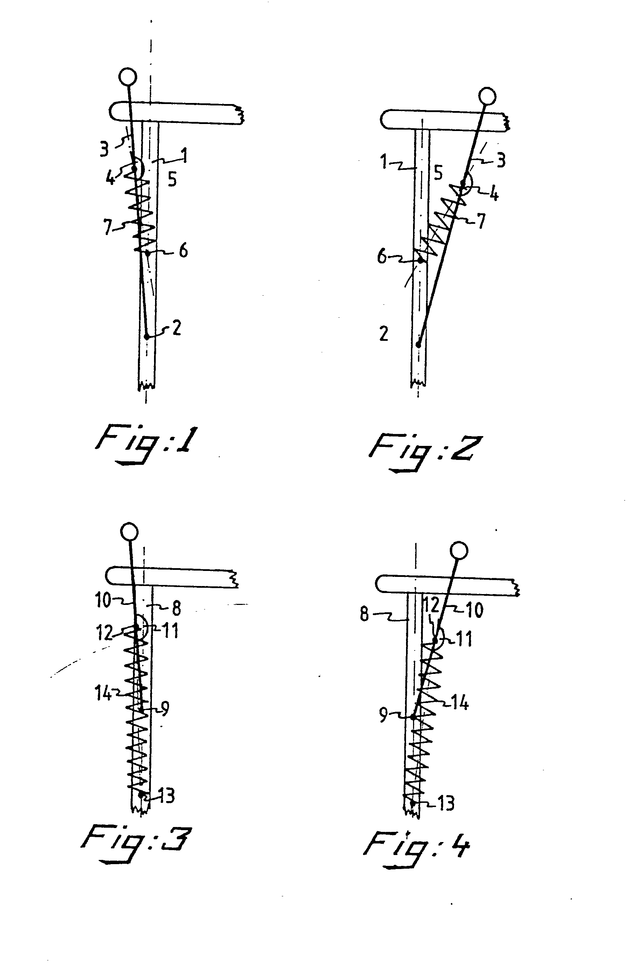

Figures 1 and 2 show schematically the working of a brake with a compression spring. To the frame 1 of the ( partly shown) rolling chair has been fixed an axle 2, around which has been attached a lever 3 such that it can revolve around it. A bracke-block 4 has been attached to the lever 3. The far ends of a compression spring 7 has been fixed to a point 5 of the lever 3 and a point 6 of the frame 1 such that it interconnect the lever 3 and the frame 1 and will try to bring the lever 3 always out of the vertical position.

Figures 3 and 4 show schematically the working of a brake with a draw-spring. To the frame 8 of the (partly shown) rolling chair has been fixed an axle 9, around which has been attached the end of a lever 10 such that it can revolve around it. On the lever 10 has been fixed a brake-block 11. The far ends of a draw-spring 14 has been fixed to a point 12 of the lever 10 and a point 13 of the frame 8 of the rolling chair. In this shown embodiment of the brake the draw-spring 14 will try to bring the lever 10 out of the vertical position. In the drawings is supposed to be the vertical position that position of the lever that brings the points 2, 6 and 4, or 13, 9 and 11 in one line. That is to say that the spring means will try to turn the lever 3, 10 to the left as shown in the figures 1 and 3, and to the right as shown in the figures 2 and 4. The revolving motion to the left (figures 1 and 3) can be limited for example by a pawl while the revolving motion to the right (figures 2 and 4) will be limited by the tire of the wheel of the rolling chair on which the brake is mounted.

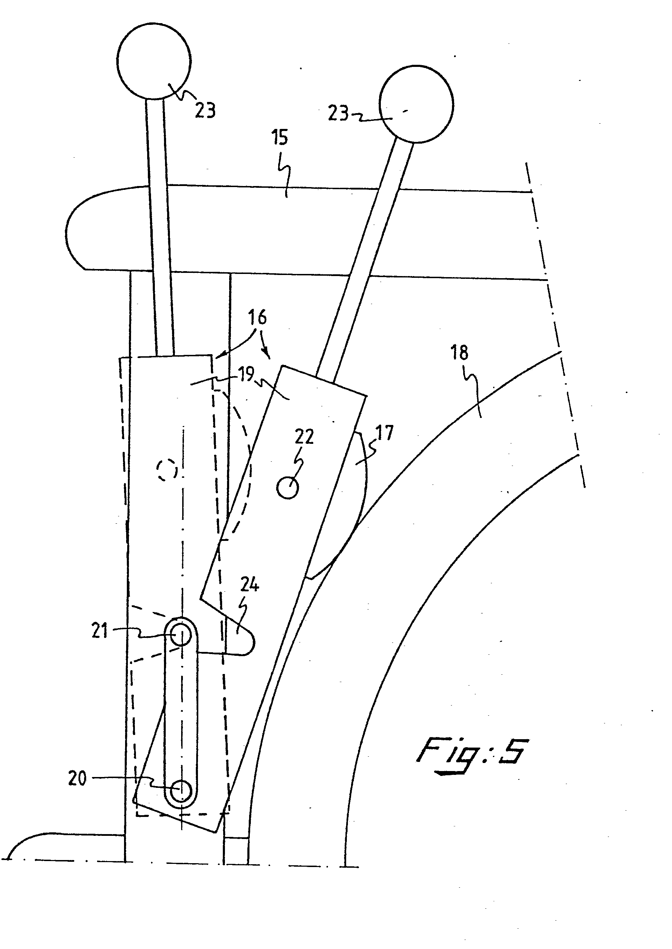

Figure 5 shows in side view a part of a rolling chair.

On the rolling chair 15 a brake 16 according to the invention has been mounted. The brake 16 consists of a casing 19 on which a brake-block 17 has been mounted. The brake 16 pushes with the brake-block 17 against a tire 18 of a wheel of the rolling chair 15. The casing 19 has been revolvable fixed on a axle 20, of which one end is connected to the frame of the rolling chair 15.

Spring means (not shown in this figure 5) interconnect an axle 21, of which one end is fixed to the frame of the rolling chair 15, and an axle 22 which is mounted to the casing 19, inside of it. In the same figure 5 the brake 16, partly dotted, has been shown in the most left position. By means of a handle 23 it can be moved from the non-working (left) position to the working (right) position, in which position the brake-block pushes against the tire 18, which causes the wheel into a fixed position and the rolling chair to a standstill. A V-shaped aperture 24 together with the axle 21 determine the maximum possible movement of the brake 16 to the left. By revolving the brake 16 by means of the handle 23 to the left the axle 22 will pass the line which interconnect the axis of the axles 20 and 21. The purpose of the aperture 24 is to maintain the brake 16 in the non-working (left) position.

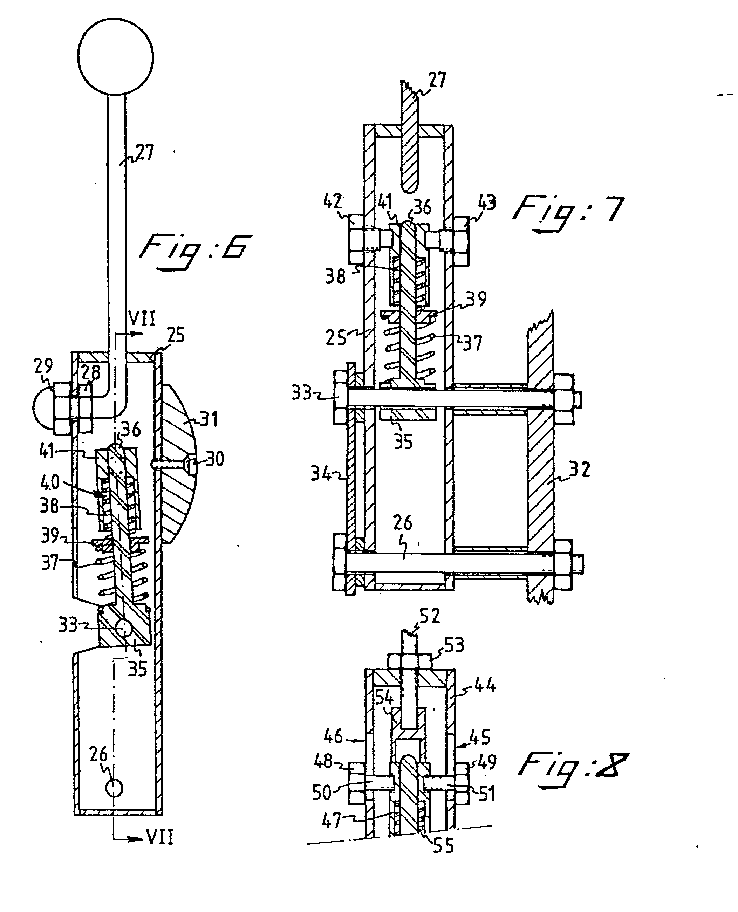

Figure 6 shows a sectional view of an embodiment of a brake according to the invention which is almost similar to the embodiment of the brake as shown in figure 5. The brake consists of a casing 25 which is mounted revolvable around a bolt 26; a handle 27 has been fixed to the casing by means of two nuts 28, 29. A brake-block 31 has been mounted to the case 25 by means of a bolt 30. Figure 7 shows a sectional view of the brake of figure 6 according to line VII-VII. One end of the bolt 26 has been fixed to the frame 32 of a rolling-chair. A second bolt 33 also fixed with one end to the frame 32, is interconnected with the bolt 26 by means of a metal sheet 34. Revolvable around the second bolt 33 a block 35 with a long pin 36 has been fixed. Around the long pin 36 has been placed a spring 37 with a spring constant of high value and in serie, but devided by a ring 39, a spring 38 with a spring constant of small value. Enclosed by, the spring

38 has been mounted inside a hole 40 of a case 41, and pushes against the bottom of it. Between two bolts 42, 43, which axis are in line, the case 41 has been revolvably supported. The two bolts are mounted into the walls of the case 25.

Figure 8 shows another embodiment of a brake according to the invention; In this embodiment of the brake two slots 45, 46 have been made into the casing 44 of the brake. To a case 47 two bolts 48, 49 are fixed such that the axis of the two bolts are in line. The shanks 50, 51 of the bolts 48, 49 pass through the slots 45, 46 of the casing 44. A handle 52 isfixed to the casing 44 by means of screw-thread and can be screwed if desired farther into or out the casing 44 and be secured by means of a nut 53. By means of an intermediate part 54 the lower part of the handle 52 pushes against the case 47 which is pushed upwards by means of a spring 55 or springs. By screwing the handle farther into or out of the casing 44 the tension of the spring 55 or springs can be augmented or diminued.

- 1 -

Claims

1. Brake, parking-brake or blocking-device for means of conveyance and more specifically for a rolling-chair, which brake comprises an axle, of which one end is connected to the frame of the rolling chair, a lever of which one end is connected to the lever, spring means of which one end is fixed to the frame and the other end to the lever, characterized in, that the spring-means consist of a compression spring.

2. Brake according to claim 1, characterized in, that the spring-means consist of two springs mounted in serie, of which one has a spring constant of a large value and the other spring a spring constant of a small value.

3. Brake according to claim 2, characterized in, that the spring-means concist of two compression springs.

4. Brake according to one of the claims 1, 2 or 3, characterized in, that adjusting means can change tension of the spring or springs inside the brake.

Fig:1   Fig:2   Fig:3   Fig:4

*Fig:5*

*Fig:6*

*Fig:7*

*Fig:8*

**0040456**

European Patent Office

**EUROPEAN SEARCH REPORT**

Application number

EP 81 20 0548

## DOCUMENTS CONSIDERED TO BE RELEVANT

| Category | Citation of document with indication, where appropriate, of relevant passages | Relevant to claim |
|---|---|---|
| X | DE - C - 684 142 (R. HOFFMANN)  * Figure 3; page 2, lines 11-29 * | 1 |
| A | DE - A - 2 532 485 (W. MEYER) | 1 |
| A | DE - C - 859 996 (H. DENNERLEIN) | 1 |
| A | GB - A - 324 247 (MORRIS, WILKINSON & CY.) | 1 |
| A | US - A - 2 782 870 (G. SILL) | 1 |
| A | DE - A - 1 954 854 (J. HARTAN) | 1 |
| A | DK - C - 60 045 (GLOBUS) | 1 |
| A | GB - A - 1 575 354 (THE SPASTICS SOC.) | 1 |
| A | GB - A - 1 073 426 (G. BELL) | 1,4 |

----

**CLASSIFICATION OF THE APPLICATION (Int. Cl.³)**

A 61 G 5/00
B 62 B 9/08

**TECHNICAL FIELDS SEARCHED (Int. Cl.³)**

A 61 G
B 62 B

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 20-08-1981 | VEREECKE |

EPO Form 1503.1  06.78